# EUROPEAN PATENT APPLICATION

(11) **EP 3 863 152 A1**
(43) Date of publication of application: **11.08.2021**
(21) Application number: 21155235.1
(22) Date of filing: 04.02.2021
(51) Int. Cl.: H02K 1/14, H02K 1/16, H02K 29/03

(54) **STATOR FOR AN ELECTRIC MOTOR OR GENERATOR AND MOTOR OR GENERATOR COMPRISING SUCH A STATOR**

(30) Priority: 07.02.2020 IT 202000002425
(71) Applicant: Sicor S.p.A., 38068 Rovereto (TN) (IT)
(72) Inventor: BELLINI, Enzo Antonio, 38068 Rovereto (TN) (IT); CHEMELLO, Marco, 38068 Rovereto (TN) (IT)
(74) Representative: Provvisionato, Paolo

(57) **Abstract**

A brushless electric machine comprises a stator (11) with a circular crown (13) from which there radially extend a plurality of teeth (14) which define slots (15) for housing a stator winding. Each tooth (14) comprises a head (16) with an end wall (18) which is intended to face a rotor surface (12) in order to define an air gap therewith. The end wall (18) has at least one depression (19) adjacent to at least one prominence (20) which together define a corresponding side wall (21). The side wall (21) is inclined with respect to a radial direction (X-X) of the rotor.

## Description

### Field of the invention

The present invention relates to the field of electric motors and generators, generally referred to below as "electric machines" (or "machines" in abbreviated form) and particularly relates to a stator for an electric motor or generator.

### Technological background

A synchronous machine with permanent magnets, also known as a brushless machine, comprises a rotor and a stator. The rotor is the moving part of the electric machine and is provided with a series of permanent magnets. The stator is the fixed part of the machine and is constituted by an assembly of thin magnetic laminations which are insulated from each other in order to reduce the losses in the iron. The stator has a circular crown, from which a given number of teeth extend radially, for example, twelve teeth which are distributed homogeneously in a circumferential direction. There are defined between adjacent teeth slots which serve to house the stator winding which is constructed by means of electric conductors which comprise insulated copper and which are wound around the teeth. The stator winding may be distributed or concentrated. In a concentrated winding, each coil is wound about a respective tooth. The coils are connected to each other in accordance with various configurations which are known in the sector. The stator teeth face each other with an end head thereof towards the rotor, from which they are separated by an air gap. The heads of the adjacent teeth are separated from each other by an opening having a small extent with respect to the extent of the slot.

The torque, driving or resistive torque, produced by such an electric machine is subjected to periodic oscillations which can cause problems in servo-drive applications which require high precision in terms of the control both of the position and of the speed, such as, for example, in the field of lifts, and in applications in which it is necessary to reduce to a minimum the distortion of the voltages and currents, that is to say, to ensure a predetermined level of power quality, such as, for example, in the field of electrical generation.

One of these torque oscillations is the "cogging" torque. It is generated by the magnetic attraction between the teeth of the stator and the permanent magnets of the rotor when the rotor is caused to rotate. In particular, the cogging torque results from the circumferential component of the attractive force which attempts to maintain the alignment between teeth of the stator and the permanent magnets of the rotor. In fact, the rotor tends to become aligned with the maximum number of stator teeth in such a manner that the reluctance of a flow line is at a minimum and the magnetic energy stored is at a maximum. It is proportional to the square of the induction flow generated by the magnets.

Another of these torque oscillations is the reluctance torque which is associated with the stator windings. It results from the variation of the reluctance of the magnetic circuit, when viewed from the stator windings of the machine, in accordance with the angular position of the rotor. It is proportional to the square of the winding current.

The above-mentioned torque oscillations contribute to the outbreak of an oscillating component, referred to herein below as a torque ripple which is added to the constant torque desired by the machine, whether driving or resistive torque. This may produce vibrations, noise and an incompletely sinusoidal form of the phase current and voltage, particularly at low speed, that is to say, in the typical operating condition of the lift installations with regard to the function as a motor, wind turbines with regard to the function as a generator. This may produce vibrations, noise and an incompletely sinusoidal form of the phase current and voltage, particularly at low speed, that is to say, in the typical operating condition of the lift installations with regard to the function of the machine as a motor, and wind turbines with regard to the function as a generator.

In order to reduce the torque ripple, it is known to incline the stator slots with respect to the axial direction, with a configuration of the electric machine known as skewing. In this manner, the variation of the reluctance of a flow line along the axial height of the stator is limited. This solution has various disadvantages resulting substantially from the complexity of manufacture of a stator which is provided with skew of the slots and the relevant winding process.

Another known solution used to reduce the torque ripple is one involving increasing the number of stator slots. The effect of multiplying the slots is also achieved with a configuration of the teeth of the bifurcated stator at the upper end which faces the rotor so as to double the frequency of the torque ripple and consequently to reduce the magnitude thereof. In this manner, the inclination of the stator slots necessary to eliminate the torque ripple is halved.

US 2019/199147 A1 describes an electric motor with a stator, the teeth of which have at the upper ends thereof a pair of channels which have the effect of reducing the cogging torque. Each channel has a width in the circumferential direction equal to from 90 to 110% of the width of the opening between the heads of the teeth.

US 2011/248595 A1 describes an electric motor in which the surface of the teeth of the stator directed towards the rotor has a relieved region, the profile of which has an undulating extent and does not have any edges in a circumferential direction and which radially widens the air gap between the stator and the rotor.

US 6104117 sets out various solutions with a different number of channels formed in the head of the teeth of the stator in order to reduce the cogging torque.

In the field of electric machines and in particular of electric motors for lift applications and direct drive generators, it is considered to be necessary to further improve the solutions of the prior art in order to attempt to virtually completely eliminate the torque ripple while simultaneously simplifying the construction itself of the electric machines.

### Statement of invention

An object of the invention is to provide a stator for an electric machine which allows the torque ripple to be minimized or even eliminated. Another object of the invention is to provide a stator for an electric machine, the teeth of which are not inclined axially with a skewing configuration but are instead aligned in planes which extend through the axis of the stator but without bringing about significant torque ripple.

Another object is to provide a stator which is simple to construct, assemble and mount in order to construct an electric machine. Another object is to construct an electric machine which is relatively economical.

According to a first aspect, there is described a stator for an electric machine which comprises a circular crown from which there radially extend a plurality of teeth which define slots between adjacent teeth for housing a stator winding. Each tooth comprises a head with an end wall which is intended to face a rotor surface in order to define an air gap therewith. The end wall may have at least one depression adjacent to at least one prominence. The depression and the adjacent prominence may together define a corresponding side wall which is inclined with respect to a radial direction of the rotor, for example, with respect to an axis of symmetry of the tooth. The inclination of the wall which joins the depression and the adjacent prominence brings about a smooth and gradual transition in the variation of the reluctance of the magnetic circuit. Preferably, the inclination of each side wall which is defined between a depression and an adjacent prominence is between 45° and 89.5° with respect to a radial direction of the rotor.

According to a particular aspect, the end wall may have a central depression with respect to an axis of symmetry of the tooth. The end wall may further have two prominences beside the central depression. The two prominences can be symmetrically arranged with respect to the axis of symmetry of the tooth.

Preferably, the end wall of the head of the tooth may generally have a substantially gull-wing-like shape.

According to a particular aspect, the central depression may be defined by two walls which are inclined in a V-like shape, the lateral ends of which define the two symmetrical prominences with respect to the centre axis of the tooth. Preferably, the inclined walls together define an angle which may be between 90° and 179° and is preferably approximately 150°.

According to another particular aspect, the two prominences on the end wall of the tooth can have respective side panels which are arranged externally with respect to the central depression and which are inclined relative to each other at an angle less than 180°. Preferably, the angle of inclination between the side panels of the prominences may be between 90° and 179° and is preferably approximately 170°.

According to another particular aspect, the head of each tooth has two ends which are substantially pointed and smoothed.

According to another aspect, there is described a synchronous electric machine with permanent magnets which comprises a stator which can incorporate one or more of the above-mentioned features. The electric machine further comprises a rotor which is mounted to be coaxial inside the stator and which is provided with a series of permanent magnets. The teeth of the stator face each other with the end heads thereof towards the rotor, from which they are separated by an air gap.

### Brief description of the drawings

Additional characteristics and advantages will become evident from the following detailed description of a preferred embodiment, with reference to the appended drawings which are given by way of non-limiting example and in which:
- Figure 1 is a plan view of a stator incorporating aspects of the present invention; and
- Figure 2 is a view, drawn to an enlarged scale, of a detail of the stator of Figure 1, illustrating a pair of adjacent stator teeth.

### Detailed description

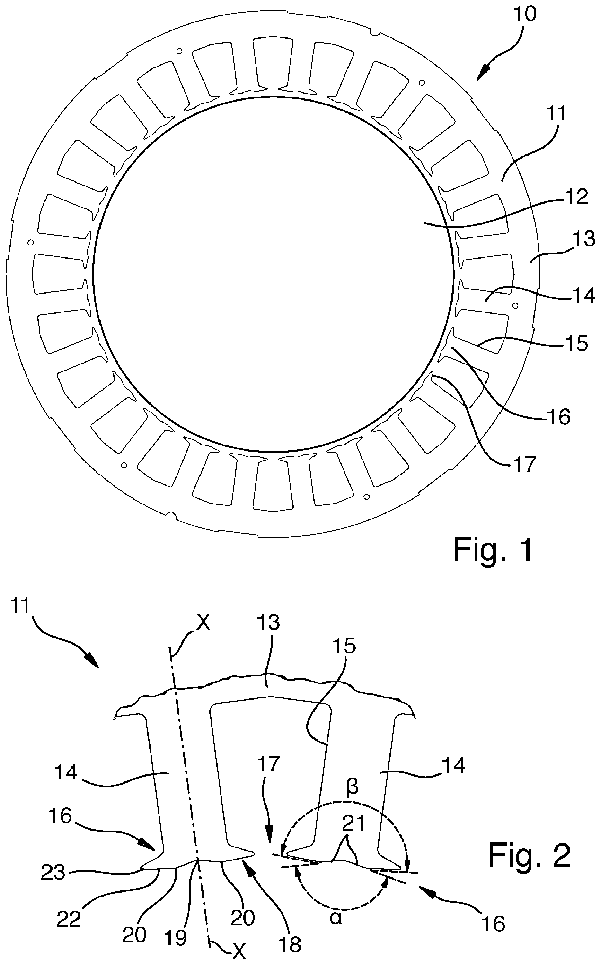

Now with reference to Figure 1, an electric machine 10 of the synchronous type with permanent magnets comprises a stator 11 and a rotor 12 which are coaxial. The rotor 12 which is schematically illustrated in Figure 1 is provided as known with a series of permanent magnets. The stator 11 is constituted by an assembly of thin magnetic laminations which are insulated from each other in order to reduce the losses in the iron. The stator 11 has a circular crown 13, from which a given number of teeth 14 radially extend, for example, twelve teeth which are distributed homogeneously in a circumferential direction.

There are defined between adjacent teeth 14 slots 15 which serve to house the stator winding which is constructed in known manner by means of electrical conductors which comprise insulated copper and which are wound around the teeth 14 in order to form coils. The teeth 14 face each other with an end head 16 thereof towards the rotor 12, from which they are separated by an air gap. The heads 16 of the adjacent teeth 14 are separated from each other by an opening 17 with a small extent with respect to the extent of the slot 15.

There are illustrated in the detail drawn to an enlarged scale in Figure 2 two adjacent teeth 14 which are separated by a common slot 15 and the heads 16 are separated from each other by the opening 17. Each head 16 comprises an end wall 18 which faces the rotor 12. The end wall 18 is substantially formed in a gull-wing-like manner with a central depression 19 which is aligned with respect to an axis of symmetry X-X of the tooth 14 and two prominences 20 which are beside the two sides of the central depression 19. The prominences 20 are preferably arranged symmetrically with respect to the axis of symmetry X-X of the tooth 14.

The central depression 19 is defined by two side walls 21 which are inclined in a V-like shape and in which the connection zone of the side walls 21 defines the lowest location of the central depression 19, that is to say, the location furthest away from the rotor 12. The side walls 21 diverge from each other so as to define with the lateral ends thereof the peaks of the respective prominences 20, that is to say, the locations of the end wall 18 nearest the rotor 12. According to experiments carried out by the Applicant, it has been noted that an optimum value, though non-limiting, of the angle α between the side walls 21 is between 90° and 179° and is preferably approximately 150°.

At the side opposite the side walls 21 which form the depression 19, the prominences 20 are defined by respective side panels 22 which extend away from the central depression 19 as far as the edges 23 of the end wall 18. The side panels 22 are preferably rectilinear. The side panels 22 are symmetrically inclined with respect to the corresponding flank walls 21 which define therewith the prominences 20. The side panels 22 are therefore inclined towards the circular crown 13 and together form an angle β less than 180° at the side opposite the rotor 12. The angle β can be between 90° and 179° and is preferably approximately 170°. The edges 23 of the heads 16 are pointed, with an end rounding.

The configuration of the teeth 14 of the stator 11, and in particular the substantially gull-wing-like shape of the end wall 18 thereof which faces the rotor 12, defines an air gap configuration which significantly eliminates the torque ripple, with the result that the electric machine has a regular and silent operation and containment of the harmonic distortion of the currents and voltages which is relatively low even at low speeds, which is particularly appreciated in the lift sector and in direct drive generation applications.

The configuration of the end head 16 of the teeth 14 may vary with respect to what has been described in the specific example set out above, and may provide, for example, for a plurality of depressions alternating with adjacent prominences. There is defined between each depression and an adjacent prominence a common side wall which is inclined with respect to the axis of symmetry of the tooth so as to define a relatively smooth transition in the variation of the reluctance of the magnetic circuit. Preferably, the inclination of each side wall defined between a depression and an adjacent prominence is between 45° and 89.5° with respect to a radial direction of the rotor, for example, with respect to the axis of symmetry X-X of the tooth.

Naturally, the principle of the invention remaining the same, the forms of embodiment and details of construction may be varied widely with respect to those described and illustrated, without thereby departing from the scope of the present invention.

## Claims

1. Stator for an electric machine comprising a circular crown (13) from which there radially extend a plurality of teeth (14) which define slots (15) for housing a stator winding, wherein each tooth comprises a head (16) with an end wall (18) which is intended to face a rotor surface (12) in order to define an air gap therewith, the end wall (18) having at least one depression (19) adjacent to at least one prominence (20) which together define a corresponding side wall (21) which is inclined with respect to a radial direction (X-X) of the rotor.

2. Stator for an electric machine according to claim 1, wherein the inclination of each side wall which is defined between a depression and an adjacent prominence is between 45° and 89.5° with respect to a radial direction (X-X) of the rotor.

3. Stator for an electric machine according to claim 1 or claim 2, wherein the end wall (18) has a central depression (19) with respect to an axis of symmetry (X-X) of the tooth (14) and two prominences (20) beside the central depression (19) so as to confer to the end wall (18) a substantially gull-wing-like shape.

4. Stator for an electric machine according to claim 3, wherein the two prominences (20) are symmetrically arranged with respect to the axis of symmetry (X-X) of the tooth (14).

5. Stator for an electric machine according to claim 3 or claim 4, wherein the central depression (19) is defined by two walls (21) which are inclined in a V-like shape, the lateral ends of which define the two prominences (20).

6. Stator for an electric machine according to claim 7, wherein the inclined walls (21) define between them an angle which is between 90° and 179° and is preferably approximately 150°.

7. Stator for an electric machine according to any one of claims 3 to 6, wherein the two prominences (20) have side panels (22) which are external with respect to the central depression (19) and which are inclined towards the circular crown (13) so as to form with each other an angle less than 180°.

8. Stator for an electric machine according to claim 7, wherein the external side panels (22) of the prominences (20) define an angle between 90° and 179°, preferably approximately 170°.

9. Stator for an electric machine according to any one of the preceding claims, wherein the head (16) of each tooth (14) has two ends (23) which are substantially pointed and smoothed.

10. Synchronous electric machine with permanent magnets comprising a stator (11) according to any one of the preceding claims, and a rotor (12) which is mounted to be coaxial inside the stator (11) and which is provided with a series of permanent magnets, wherein the teeth (14) of the stator (11) face each other with the end head (16) thereof towards the rotor (12), from which they are separated by an air gap.
